# EUROPÄISCHE PATENTSCHRIFT

(11) **EP 1 923 239 B1**
(45) Veröffentlichungstag und Bekanntmachung des Hinweises auf die Patenterteilung: **25.12.2013**
(21) Anmeldenummer: 07118083.0
(22) Anmeldetag: 09.10.2007
(51) Int. Cl.: B60G 3/01

(54) **Radträger eines mehrspurigen Fahrzeugs**
Wheel carrier of a multitrack vehicle
Support de roue d'un véhicule à voies multiples

(30) Priorität: 17.11.2006 DE 102006054200
(43) Veröffentlichungstag der Anmeldung: 21.05.2008
(73) Patentinhaber: Bayerische Motoren Werke Aktiengesellschaft, 80809 München (DE)
(72) Erfinder: Schmidt, Roland, 82131 Stockdorf (DE); Pauly, Axel, 85757 Karlsfeld (DE); Faulstroh, Hans-Joachim, 86938 Schondorf (DE)

(56) Entgegenhaltungen:
- DE-A1-102004 048 789
- FR-A- 2 726 227
- US-A- 4 455 038

## Beschreibung

Die Erfindung betrifft eine Radaufhängung mit einem Radträger nach dem Oberbegriff des Anspruchs 1. Zum Stand der Technik wird auf die DE 10 2004 049 296 A1 und insbesondere auf die DE 10 2004 048 789 A1 verwiesen.

Radträger als solche sind dem Fachmann für Fahrwerksysteme an Fahrzeugen, insbesondere Kraftfahrzeugen, grundsätzlich bekannt. Bekanntermaßen kann ein Radträger über mehrere Lenker, die als sog. Führungsorgane fungieren, geführt, d.h. in geeigneter Weise beweglich am Aufbau des Fahrzeugs angelenkt sein, alternativ sind Achssysteme bekannt, die im wesentlichen keine Lenker aufweisen, sondern bei denen eine die Einfeder- und Ausfeder-Bewegung des Fahrzeug-Aufbaus gegenüber dem Rad ermöglichende Linearführung oder dgl. - ebenfalls als sog. Führungsorgan bezeichnet - zumindest anteilig in der sog. Radschüssel bzw. Felgenschüssel der am Radträger montierten Radfelge angeordnet ist, vgl. hierzu die genannte DE 10 2004 048 789 A1.

Grundsätzlich bekannt ist die sog. Elastokinematik von Radaufhängungen bzw. Fahrzeug-Achssystemen, d.h. dass sich mittels in der Radführung geeignet angeordneter Gummilager bzw. Elastomerelementen die Eigenschaft(en) der Achse bzw. das Fahrverhalten des Fahrzeugs positiv beeinflussen lässt oder lassen. Diese Elastomerelemente ermöglichen zudem eine gewisse Federung in Fahrzeug-Längsrichtung und bewirken eine Schwingungs- und Geräuschentkopplung, was den Fahr-Komfort verbessert. Dabei sind im bekannten Stand der Technik die Gummilager bzw. Elastomerelemente insbesondere an den Verbindungsstellen der sog. Führungsorgane mit dem Fahrzeug-Aufbau, nebengeordnet auch an der Verbindung zwischen den Führungsorganen und dem Radträger, vorgesehen. Mit diesen vorgegebenen Möglichkeiten für die Anordnung von Elastomerelementen sind die Möglichkeiten zur Auslegung der Elastokinematik einer Radaufhängung bzw. eines Achs-Konzeptes zwangsweise begrenzt. Demgegenüber vorteilhafter ist ein mehrteiliger Radträger mit den im Oberbegriff des Anspruchs 1 angegebenen Merkmalen. Dabei ist abweichend vom üblichen Stand der Technik der Radträger mehrteilig aufgebaut und es sind zwischen dessen einzelnen Bauelementen Elastomerelemente vorgesehen, sodass dessen einzelne Bauelemente unter Zwischenlage von Elastomerelementen bzw. Gummilagern miteinander verbunden sind. Beispielsweise kann eine Trennebene zwischen den einzelnen, vorzugsweise zwei (wesentlichen) Bauelementen eines erfindungsgemäßen Radträgers im wesentlichen in der zur Drehachse des am Radträger montierten Rades senkrechten Mittenebene des Radträgers, die näherungsweise auch die Rad-Mittenebene darstellen kann, verlaufen. Damit befinden sich die Elastomerelemente zwischen den einzelnen Bauelementen des Radträgers ebenfalls im wesentlichen in der besagten Mittenebene und somit bezüglich des Rades in einem Bereich, in dem bislang kein Gummilager bzw. Elastomerelement, mit welchem die Elastokinematik der Radaufhängung gestaltet werden kann, untergebracht bzw. vorgesehen werden konnte. Die Auslegungsfreiheit der sog. Elastokinematik ist somit bei Verwendung eines erfindungsgemäßen Radträgers erheblich vergrößert.

Aufgabe der vorliegenden Erfindung ist es, für eine Radaufhängung mit einem Radträger nach dem Oberbegriff des Anspruchs 1 eine besonders günstige Anordnung der Elastomerelemente zwischen zwei Radträger-Bauelementen aufzuzeigen.

Die Lösung dieser Aufgabe ist dadurch gekennzeichnet, dass die beiden Bauelemente des Radträgers über ein in Fahrtrichtung betrachtet vorderes und in der Höhe in etwa mittig angeordnetes erstes Elastomerelement sowie über zwei im wesentlichen hinter Radmitte liegende Elastomerelemente miteinander verbunden sind, von denen eines oberhalb und das andere unterhalb der Radmitte angeordnet ist. Eine solche Anordnung ist im Hinblick auf am Radträger anliegende, um die Rad-Drehachse gerichtete Momente, die durch das Abbremsen des Rades oder den Antrieb desselben hervorgerufen werden, besonders vorteilhaft.

Bei einer erfindungsgemäße Radaufhängung ist der Radträger demnach in zumindest zwei voneinander trennbare und über Elastomerelemente miteinander verbundene wesentliche Bauelemente unterteilt, nämlich ein erstes sog. radseitiges Bauelement und ein zweites sog. führungsseitiges Bauelement. Jedes dieser Bauelemente hat somit eine spezifische Funktion und kann somit spezifisch hierauf ausgelegt sein. Das radseitige Bauelement ist mit einer Nabe oder einer Radlagereinheit zur Aufnahme des Rades sowie mit Abstützpunkten für die Tragfeder und den Schwingungsdämpfer versehen und trägt somit das am Radträger befestigte Rad bzw. dient insbesondere zur Aufnahme der zwischen dem Fahrzeug-Aufbau und dem Rade übertragenen Vertikalkräfte, die vorteilhafterweise unter Umgehung radführender Elastomerelemente über dieses radseitige Bauelement geleitet werden können. Letztere befinden sich nämlich zwischen diesem radseitigen Bauelement und dem weiteren, sog. führungsseitigen Bauelement des Radträgers, an dem das oder im Falle mehrerer Führungsorgane zumindest die wesentlichen Führungsorgane angelenkt sind. Beispielsweise empfiehlt es sich, bei einer Doppelquerlenkerachse oder einer Fünflenker-Achse jedenfalls die eigentlichen Radführungslenker am führungsseitigen Bauelement anzulenken, während ein Spurlenker durchaus auch am radseitigen Bauelement angelenkt sein kann.

Selbstverständlich müssen nicht sämtliche Elastomerelemente, über die einzelne Bauelemente eines "geteilten" Radträgers miteinander verbunden sind, im Bereich der weiter oben beispielhaft genannten Mittenebene oder allgemein innerhalb der sog. Radschüssel oder Felgenschüssel einer am Radträger montierten Radfelge liegen, sondern es können angepasst an die Gestaltung der Trennfuge oder Trennebene des Radträgers, die selbstverständlich keine Ebene im geometrisch-mathematischen Sinne beschreiben muss, eines oder mehrere der die Bauelemente des Radträgers quasi miteinander verbindenden Elastomerelemente auch außerhalb der Rad- bzw. Felgenschüssel (und somit näher zum Fahrzeug-Aufbau hin) liegen bzw. angeordnet sein.

Nach einer vorteilhaften Weiterbildung ist eine Radbremse am radseitigen Bauelement des Radträgers abgestützt, und zwar sowohl im Hinblick auf eine aufgrund der Elastomerelemente mögliche Relativbewegung zwischen den besagten Bauelementen des Radträgers als auch im Hinblick darauf, dass das führungsseitige Bauelement des Radträgers nicht mit solchen nicht direkt der Radführung dienenden Kräften belastet werden sollte. Dabei wird bekanntlich angestrebt, dass die Räder bei Bremsvorgängen vermehrt in Vorspur gehen, um eine Untersteuertendenz zu erzielen. Dies kann an einem erfindungsgemäßen Radträger nun besonders effektiv erreicht werden, wenn ein oder das in Fahrtrichtung betrachtet vor Radmitte liegende(s) Elastomerelement zwischen den beiden Bauelementen des Radträgers solchermaßen um die Hochachse des Fahrzeugs gedreht angeordnet ist, dass eine durch Bremsen verursachte Verschiebung des Rades nach hinten ein gewünschtes Vorspurlenken mit Untersteuertendenz hervorruft.

In einer bevorzugten Ausführungsform ist das Führungsorgan in Form eines Führungsbahnelementes mit auf diesem verschiebbar geführtem Führungselement gebildet, wobei entweder das Führungselement oder vorzugsweise das Führungsbahnelement am führungsseitigen Bauelement des Radträgers befestigt ist oder dieses im wesentlichen bildet, während das andere Element am Aufbau des Fahrzeugs befestigt ist. Mit einem solchen Radführungskonzept, welches auch als Linearführung bezeichnet werden kann, wobei das Führungsbahnelement ausdrücklich nicht geradlinig sein muss, sondern durchaus gekrümmt gestaltet sein kann, verschafft ein erfindungsgemäßer Radträger vorteilhafterweise einen nennenswerten Bauraumgewinn, da die weiterhin benötigten Elastomerelemente dann auf elegante Weise innerhalb einer bereits mehrfach genannten Felgenschüssel vorgesehen sein bzw. praktisch in die weiter oben genannte (Rad)-Mittenebene gelegt werden können.

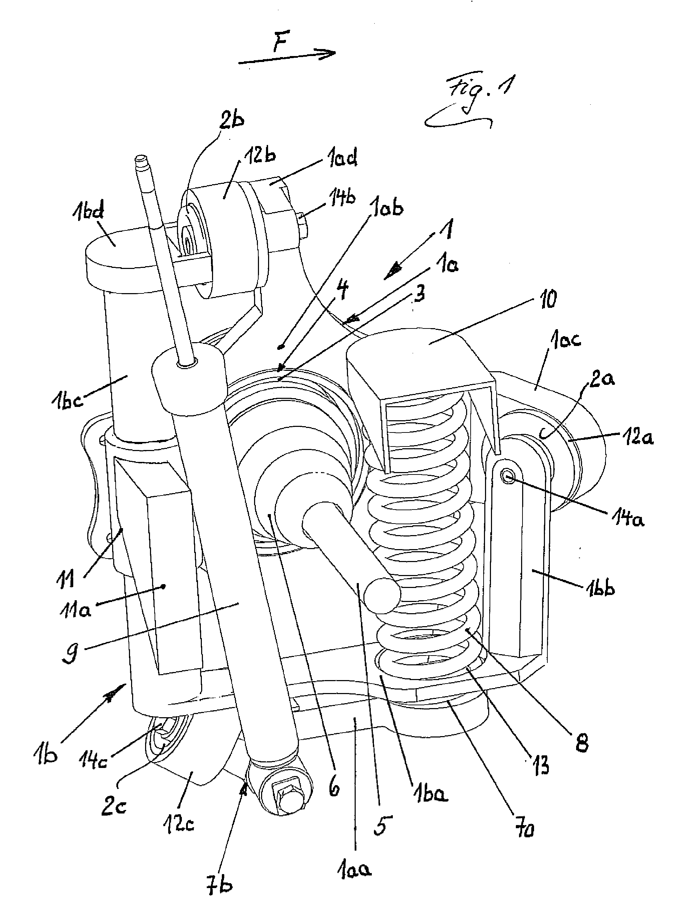

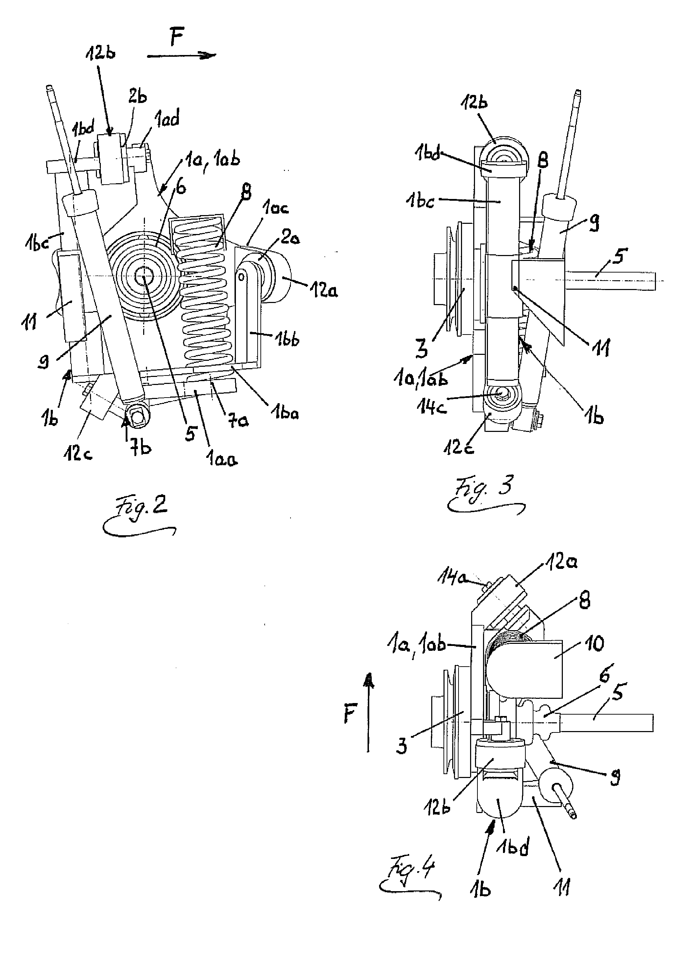

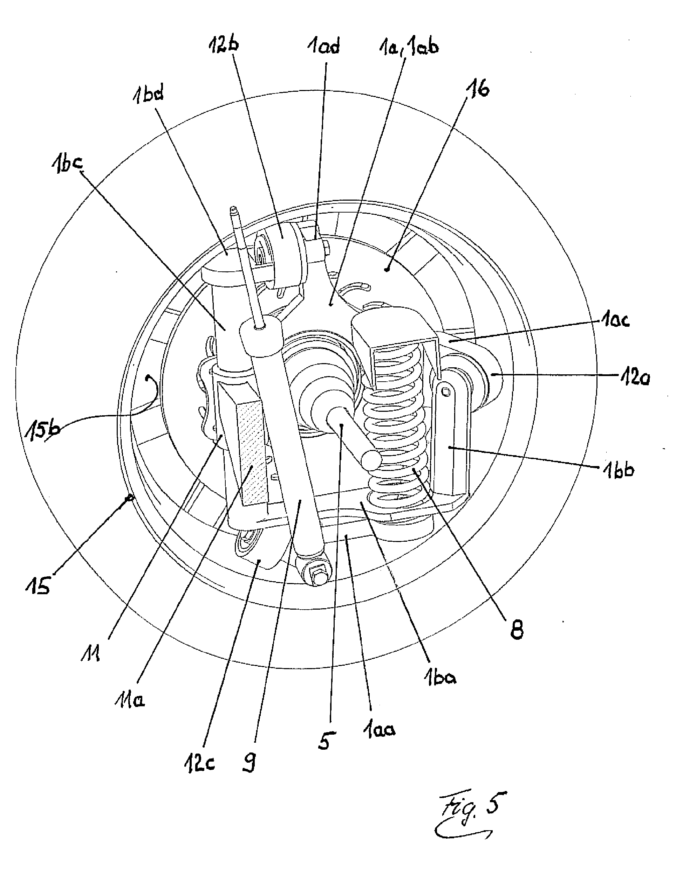

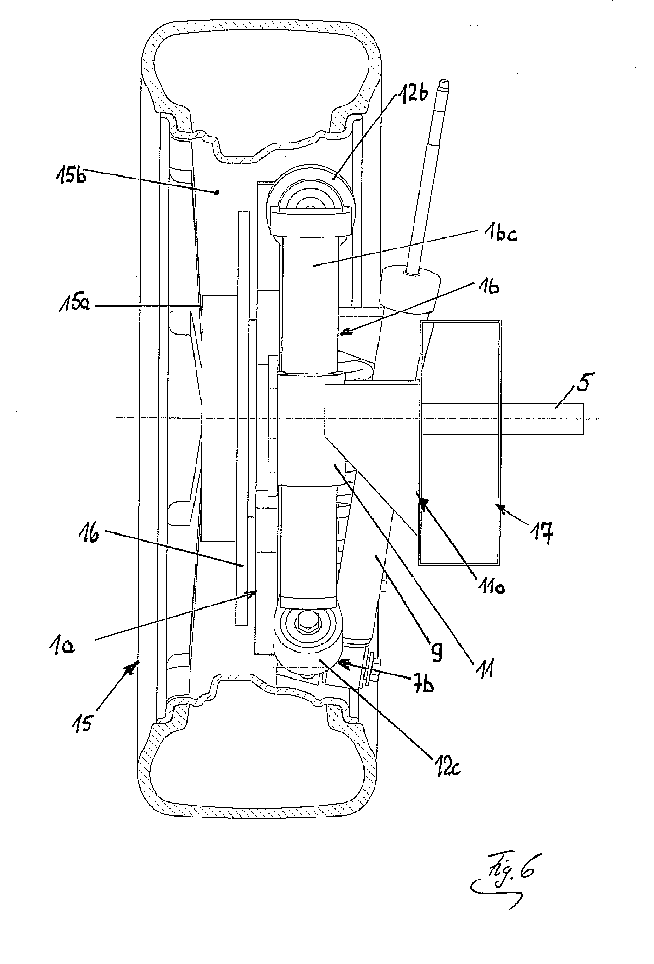

Im folgenden wird die Erfindung anhand eines bevorzugten Ausführungsbeispieles weiter erläutert, wobei die beigefügte **Figur 1** einen erfindungsgemäßen linken Radträger für die angetriebene Hinterachse eines zweispurigen Kraftfahrzeugs in räumlicher Darstellung von der Fahrzeug-Mitte aus schräg von oben betrachtet zeigt, der in **Figur 2** in einer Seitenansicht von innen, d.h. von der Fzg.-Mitte her, in **Figur 3** in einer Ansicht von hinten und in **Figur 4** in Draufsicht von oben dargestellt ist. **Figur 5** zeigt einen Ansicht entsprechend Fig.1 und **Figur 6** eine Ansicht entsprechend Fig. 3 jeweils mit am Radträger montiertem Rad mit Bremsscheibe. Erfindungswesentlich können dabei sämtliche näher beschriebenen Merkmale sein und selbstverständlich kann ein erfindungsgemäßer Radträger in entsprechend modifizierter Form auch für eine nicht angetriebene Hinterachse oder für eine angetriebene oder nicht angetriebene Fahrzeug-Vorderachse vorgesehen sein.

Mit der Bezugsziffer 1 ist ein erfindungsgemäßer Radträger bezeichnet, an dem außenseitig, d.h. in der Ansicht nach Fig.3 oder Fig. 4 von links her in bekannter Weise ein Rad 15 mit dem Boden 15a seiner sog. Rad- oder Felgenschüssel 15b unter Zwischenlage einer Bremsscheibe 16 angeflanscht werden kann. Dieser Radträger 1 besteht aus einem ersten, sog. radseitigen Bauelement 1a und einem zweiten, sog. führungsseitigen Bauelement 1b, wobei diese beiden Bauelemente 1a,1b über bzw. unter Zwischenschaltung von Elastomerelementen 2a, 2b, 2c miteinander verbunden sind.

Im Detail dient das radseitige Bauelement 1a des Radträgers 1 zur Aufnahme einer Radlagereinheit 3, die in einen Durchbruch 4 im radseitigen Bauelement 1a eingesetzt ist, wobei in den Figuren zusätzlich zu dieser Radlagereinheit 3 eine daran angeschlossene Antriebswelle 5 sowie eine den Anbindungsbereich dieser Antriebswelle 5 an die Radlagereinheit 3 abdeckende Achsmanschette 6 dargestellt ist. Weiterhin weist das radseitige Bauelement 1a einen Abstützpunkt 7a für eine Tragfeder 8 sowie einen Abstützpunkt 7b für einen Schwingungsdämpfer 9 auf. Sowohl die Tragfeder 8 als auch der Schwingungsdämpfer 9 sind mit ihren den Abstützpunkten 7a, 7b gegenüberliegenden Enden in an sich üblicher Weise am figürlich nicht dargestellten Fahrzeug-Aufbau abgestützt; für die Tragfeder 8 ist hier jedoch ein sog. Abstützflansch 10 gezeigt. Die genannten Abstützpunkte 7a, 7b befinden sich an einem unteren, horizontalen Schenkel 1aa des nach der Ansicht nach Fig.3 teilweise L-förmigen Bauelements 1a, während der Durchbruch 4 im vertikalen Schenkel 1ab des radseitigen Bauelements 1a vorgesehen ist.

Das führungsseitige Bauelement 1b des Radträgers 1 ist im wesentlichen U-förmig gestaltet, wie insbesondere aus Fig.1 hervorgeht und weist ebenfalls einen unteren Schenkel 1ba auf, der im wesentlichen parallel zum und oberhalb des Schenkel(s) 1aa des radseitigen Bauelements 1a verläuft, so dass im Schenkel 1ba eine Durchtrittsöffnung 13 für die Tragfeder 8 vorgesehen ist. Ein bzw. der in Fahrtrichtung F des Fahrzeugs betrachtet vordere(r) Schenkel 1bb des führungsseitigen Bauelements 1b ist mit seinem freien Ende über das Elastomerelement 2a mit dem radseitigen Bauelement 1a des Radträgers 1 verbunden, worauf an späterer Stelle noch näher eingegangen wird. Auch ein bzw. der in Fahrtrichtung F des Fahrzeugs betrachtet hintere(r) Schenkel 1bc des führungsseitigen Bauelements 1b ist mit seinem freien Ende über das Elastomerelement 2b mit dem radseitigen Bauelement 1a des Radträgers verbunden, worauf ebenfalls später weiter eingegangen wird. Der besagte hintere Schenkel 1bc fungiert als sog. Führungsbahnelement, für welches demzufolge ebenfalls das Bezugszeichen 1bc verwendet wird. Auf diesem hier in Form eines vertikal stehenden Kreiszylinders ausgebildeten Führungsbahnelement 1bc ist ein sog. Führungselement 11, welches eine nennenswerte Erstreckung in Richtung der Zylinderachse oder Längsachse des Führungsbahnelementes 1bc aufweist, in Richtung der besagten Zylinderlängsachse längsverschiebbar geführt. Mit seiner in Fig.1 vorderen freien Stirnseite 11a ist dieses Führungselement 11 am lediglich in Fig.6 in Form eines Längsträgers 17 dargestellten Fzg.-Aufbau angeflanscht. Somit ist durch das Führungselement 11 mit dem Führungsbahnelement 1bc eine Linearführung des führungsseitigen Bauelements 1b des Radträgers 1 (und somit auch eines an diesem befestigten, figürlich nicht dargestellten Rades) gegenüber dem Fzg.-Aufbau in Vertikalrichtung realisiert, wobei diese so gebildete Linearführung auch als Führungsorgan für das Fzg.-Rad 15 bezeichnet werden kann.

Wie bereits kurz erwähnt wurde, sind die beiden Bauelemente 1a, 1b des Radträgers unter Zwischenschaltung von Elastomerelementen 2a, 2b, 2c, die auch als Gummilager bezeichnet werden können, miteinander verbunden.

Ein erstes solches Elastomerelement 2a ist in Fzg.-Fahrtrichtung F betrachtet vorne und in Vertikalrichtung betrachtet in etwa in der Mitte des Radträgers 1 vorgesehen, wobei in einem geeignet geformten Fortsatz 1ac des Bauelements 1a eine Lagerbuchse 12a ausgebildet ist, in die das ringförmige Elastomerelement 2a in einer für Gummilager in Fahrzeug-Fahrwerken im wesentlichen üblichen Bauart eingesetzt ist. Das Zentrum dieses Eastomerelements 2a durchdringt eine am freien Ende des vorderen Schenkels 1bb des führungsseitigen Radträger-Bauelements 1b vorgesehene Befestigungsschraube 14a in an sich üblicher Bauweise, so dass über diese Befestigungsschraube 14a (mit zugehörigem Gegenstück) unter Zwischenschaltung des Elastomerelements 2a eine erste lösbare Verbindung zwischen den beiden Radträger-Bauelementen 1a, 1b hergestellt ist.

Ein zweites Elastomerelement 2b ist in Fzg.-Fahrtrichtung F betrachtet hinten und in Vertikalrichtung betrachtet oben bezüglich des bzw. am Radträger(s) 1 vorgesehen, wobei an einem geeignet geformten Fortsatz 1bd des Bauelements 1b eine Lagerbuchse 12b angebracht ist, in die das ringförmige Elastomerelement 2b in einer für Gummilager in Fahrzeug-Fahrwerken im wesentlichen üblichen Bauart eingesetzt ist. Das Zentrum dieses Eastomerelements 2b durchdringt eine an einem geeignet geformten Fortsatzes 1ad des radseitigen Radträger-Bauelements 1a abgestützte Befestigungsschraube 14b in an sich üblicher Bauweise, so dass über diese Befestigungsschraube 14b (mit zugehörigem Gegenstück) unter Zwischenschaltung des Elastomerelements 2b eine zweite lösbare Verbindung zwischen den beiden Radträger-Bauelementen 1a,1b hergestellt ist..

Ein drittes Elastomerelement 2c ist in Fzg.-Fahrtrichtung F betrachtet hinten und in Vertikalrichtung betrachtet unten bezüglich des bzw. am Radträger(s) 1 vorgesehen, wobei an der Unterseite des horizontalen Schenkels 1ba des führungsseitigen Radträger-Bauelements 1b eine Lagerbuchse 12c angebracht ist, in die das ringförmige Elastomerelement 2c in einer für Gummilager in Fahrzeug-Fahrwerken im wesentlichen üblichen Bauart eingesetzt ist. Das Zentrum dieses Elastomerelements 2c durchdringt eine am horizontalen Schenkel 1aa des radseitigen Radträger-Bauelements 1a abgestützte Befestigungsschraube 14c in an sich üblicher Bauweise, so dass über diese Befestigungsschraube 14c (mit zugehörigem Gegenstück) unter Zwischenschaltung des Elastomerelements 2c eine dritte lösbare Verbindung zwischen den beiden Radträger-Bauelementen 1a, 1b hergestellt ist..

Die Befestigungsschraube 14b ist im wesentlichen in Fahrtrichtung F ausgerichtet, während die Befestigungsschraube 14c in Fahrtrichtung F betrachtet nach unten geneigt in einer durch die Fahrtrichtung F definierten Vertikalebene liegt. Die (vordere) im wesentlichen horizontal ausgerichtete Befestigungsschraube 14a hingegen und mir ihr das in Fahrtrichtung F betrachtet vorne, jedenfalls vor dem Radmittelpunkt bzw. vor Radträger-Mitte liegende Elastomerelement 2a ist solchermaßen um die Vertikale (= Hochachse) gedreht (vgl. insbesondere Fig.4), dass eine durch einen Bremsvorgang hervorgerufene geringfügige Verschiebung des Rades (15) nach hinten ein gewünschtes Vorspurlenken desselben mit daraus resultierender Untersteuertendenz hervorruft.

Es sei ausdrücklich darauf hingewiesen, dass hier eine beispielhafte Anordnung und Ausrichtung der Elastomerelemente 2a - 2c bzw. der entsprechenden Gummilager mit zugehörigen Befestigungsschrauben 14a - 14c gezeigt ist, In der Regel beeinflussen nämlich sämtliche zwischen den beiden Radträger-Bauelementen 1a, 1b bzw. in deren Verbindungsbereichen vorgesehenen Elastomerelemente 2a, 2b, 2c gleichzeitig und in Wechselwirkung miteinander die Elastokinematik einer entsprechenden Radaufhängung mit einem erfindungsgemäßen Radträger 1. Dennoch kann durch geeignete Ausrichtung der Elastomerelemente sowie geeignete Auswahl von deren Elastizitäten in den verschiedenen Belastungsrichtungen die Elastokinematik einer Radaufhängung gezielt beeinflusst bzw. eingestellt werden. Beispielhaft sei anhand der folgenden vier Lastfälle, nämlich beim Anliegen von Seitenkräften, beim Anliegen von Bremskräften, beim Beschleunigen des Fahrzeugs und bei Längsfederungs-Vorgängen, bspw. in Folge einer Schwellen-Überfahrt, die Wirkungsweise bzw. eine bevorzugte Auslegung der Elastomerelemente 2a - 2c erläutert:

Betrachtet man das kurvenäußere Rad (15), so ist unter Seitenkraft-Einfluss verstärkte Vorspur und somit Untersteuertendez gewünscht, und zwar bei möglichst geringem Sturzverlust. Im Hinblick hierauf ist die Linearführung durch das Führungsbahnelement 1bc, das durchaus auch bogenförmig sein kann, hinter dem Radmittelpunkt bzw. der Radträger-Mitte angeordnet, so dass sich aus einer elastischen Verformung des führungsseitigen Radträgers 1b bereits eine Vorspurtendenz ergibt. Das vordere Elastomerelement 2a bzw. das vordere Gummilager zwischen den beiden Radträger-Bauelementen 1a, 1b wird vorzugsweise weich ausgeführt, auch hinsichtlich anderer Lastfälle. Hieraus ergibt sich ebenfalls eine Vorspurtendenz. Um übermäßigen Sturzverlust zu vermeiden, wird vorgeschlagen, insbesondere das hintere untere Elastomerelement 2c bzw. das entsprechende Gummilager, ggf. zusätzlich das hintere obere Elastomerelement 2b bzw. das entsprechende Gummilager, in seitlicher Richtung, d.h. quer zur Fahrrichtung F, relativ steif auszuführen.

In Verbindung mit Brems-Vorgängen ist ebenfalls mehr Vorspur und somit eine Untersteuertendez erwünscht. Um dies zu erreichen ist - wie bereits erläutert wurde - das vordere Elastomerelement 2a bzw. die Befestigungsschraube 14a des entsprechenden Gummilagers um die Vertikalachse (= Hochachse) gedreht, sodass eine Längsverschiebung des Rades (15) nach hinten gleichzeitig ein Vorspurlenken erzeugt. Die Längskraft wird in der Hauptsache von dem relativ steifen unteren Gummilager bzw. Elastomerelement 2c abgestützt und das Bremsmoment von den beiden anderen Gummilagern bzw. Elastomerelmenten 2a, 2b aufgenommen.

Durch geeignetes Anstellen eines oder beider dieser Elastomerelemente 2a, 2b kann im übrigen auch eine bremsmomentenabhängige Elastokinematik erzeugt werden. Wenngleich dies am hier dargestellten Ausführungsbeispiel nicht realisiert ist, so sei dies doch im folgenden kurz erläutert. Im Gegensatz zu reinen Längskräften wie Antriebskräften und dem sog. Schleppmoment, das sich bei durch die rotierenden Räder angetriebenem Fzg.-Antriebsaggregat einstellt, wird bei Bremsvorgängen durch Abbremsen der rotierenden Räder ein Drehmoment zwischen den beiden Radträgern erzeugt. Wenn nun das vordere Elastomerelement 2a wie gezeigt um die Hochachse verdreht ist, wird - wie erläutert - beim Antreiben erwünschtermaßen Vorspur und beim Verzögern durch Schleppmoment oder Bremsen erwünschtermaßen Nachspur erzeugt. Wenn - was hier nicht dargestellt ist - das vordere Elastomerelement 2a zusätzlich um die Fzg.-Querachse nach hinten-unten verdreht ist, d.h. mit seiner in Fig.1 sichtbaren Stirnfläche zur Fahrbahn hin geneigt ist, so kann ein bremsmoment-abhängiger Unterschied der Elastokinematik erreicht werden, denn mit dieser Anordnung ergibt sich durch das genannte Bremsdrehmoment eine Verlagerung des betroffenen Lagerpunktes des vorderen Elastomerelements 2 nach hinten-unten, was dann zusammen mit der besagten Verdrehung um die Fzg.-Hochachse bremsmomentenabhängig Vorspur erzeugt.

Im übrigen wirkt bei Beschleunigungs-Vorgängen des Fahrzeugs, d.h. mit Antriebskräften die Elastokinematik umgekehrt wie beim Bremsen und erzeugt ein gewünschtes Lenken in Richtung Nachspur. Da beim Beschleunigen kein Drehmoment am Radträger 1 auftritt, kommt eine bremsmomentenabhängige Elastokinematik hierbei nicht zum Tragen. Eine gewünschte bzw. umzusetzende Längsfederung, d.h. Elastizität in Fzg.-Längsrichtung bzw. Fahrtrichtung F ergibt sich vorzugsweise durch geeignete weiche Auslegung des oberen Elastomerelements 2b sowie des vorderen Elastomerelements 2a in Fzg.-Längsrichtung. Der Radträger 1 dreht somit tendenziell um das relativ harte untere Gummilager bzw. Elastomerelement 2c.

Mit einem erfindungsgemäßen Radträger 1 ergibt sich durch die hierbei mögliche Anordnung der Elastomerelemente 2a - 2c bzw. allgemein der Gummilager und somit der Elastokinematik in der Rad- bzw. Felgenschüssel ein nennenswerter Bauraumgewinn für den Innenraum des Fahrzeugs. Lediglich Befestigungselemente sowie ggf. der Schwingungsdämpfer 9 ragen aus der Radschüssel oder Felgenschüssel 15b hinaus. Dieses System ermöglicht zudem einen modularen Ansatz mit Vorteilen bei Variantenvielfalt, Fertigung und Montage, wobei vorteilhafterweise prinzipbedingte Nachteile anderer Achssysteme kompensiert werden können, indem hinsichtlich der Auslegung der Elastokinematik, wie weiter oben ausgeführt wurde, ein größerer Auslegungsspielraum besteht.

Vorteilhafterweise stützen sich die relativ hohen Kräfte der Tragfeder 8 sowie des Schwingungsdämpfers 9 direkt und somit unter Umgehung der Elastomerelemente 2a - 2c am radseitigen Bauelement 1a des Radträgers 1 ab, so dass diese Elastomerelemente 2a - 2c lediglich Seitenkräfte und Längskräfte, nicht jedoch in Vertikalrichtung auftretende Federkräfte und Dämpferkräfte übertragen müssen. Damit können die Elastomerelemente 2a - 2c relativ weich ausgelegt werden, was vorteilhaft für die Auslegung der Elastokinematik ist. Weiche Elstomerelemente 2a - 2c bzw. Gummilager ermöglichen zudem eine gute Schwingungs- und Geräuschisolation. Schließlich sei noch darauf hingewiesen, dass durchaus eine Vielzahl von Details abweichend von obigen Erläuterungen gestaltet sein kann, ohne den Inhalt der Patentansprüche zu verlassen.

### Bezugszeichenliste:

- 1: Radträger
- 1a: radseitiges Bauelement (von 1)
- 1aa: horizontaler Schenkel (von 1a)
- 1ab: vertikaler Schenkel (von 1 a)
- 1ac: Fortsatz zur Ausbildung von 12a
- 1ad: Fortsatz für 14b bzw. 2b
- 1b: führungsseitiges Bauelement (von 1)
- 1ba: horizontaler Schenkel (von 1b)
- 1bb: vorderer Schenkel (von 1b)
- 1bc: hinterer Schenkel (von 1 b) = Führungsbahnelement
- 1bd: Fortsatz zur Ausbildung von 12b
- 2a: Elastomerelement oder Gummilager (vorne, Mitte)
- 2b: Elastomerelement oder Gummilager (hinten, oben)
- 2c: Elastomerelement oder Gummilager (hinten, unten)
- 3: Radlagereinheit
- 4: Durchbruch (für 3 in 1ab)
- 5: Antriebswelle
- 6: Achsmanschette
- 7a: Abstützpunkt (für 8 an 1 aa)
- 7b: Abstützpunkt (für 9 an 1 aa)
- 8: Tragfeder
- 9: Schwingungsdämpfer
- 10: Abstützflansch (für 8)
- 11: Führungselement
- 11a: freie Stirnseite von 11a
- 12a: Lagerbuchse in 1ac (für 2a)
- 12b: Lagerbuchse an 1bc (für 2b)
- 12c: Lagerbuchse an 1ba (für 2c)
- 13: Durchtrittsöffnung (für 8 in 1ba)
- 14a: Befestigungsschraube (in Verbindung mit 2a)
- 14b: Befestigungsschraube (in Verbindung mit 2b)
- 14c: Befestigungsschraube (in Verbindung mit 2c)
- 15: Rad
- 15a: Boden der Rad- oder Felgenschüssel
- 15b: Rad- oder Felgenschüssel
- 16: Bremsscheibe
- 17: Längsträger des Fzg.-Aufbaus (in Fig.6)

## Patentansprüche

1. Radaufhängung mit einem Radträger insbesondere für eine Achse eines mehrspurigen Fahrzeugs, an dem direkt oder indirekt eine den Aufbau des Fahrzeugs anteilig tragende Tragfeder (8) sowie hierzu parallel ein Schwingungsdämpfer (9) abgestützt sind und der über ein oder mehrere Führungsorgan(e) (1bc mit 11) insbesondere im Hinblick auf die Einfeder- und Ausfeder-Bewegungen des Fahrzeugaufbaus gegenüber dem Rad (15) relativ zum Aufbau geführt ist und wobei mit dem oder den Führungsorgan(en) Elastomerelemente (2a - 2c) zusammenwirken, wobei der Radträger (1) mehrteilig aufgebaut ist und ein erstes radseitiges Bauelement (1a) aufweist, welches mit einer Nabe oder einer Radlagereinheit (3) zur Aufnahme des Rades (15) sowie mit Abstützpunkten (7a, 7b) für die Tragfeder (8) und den Schwingungsdämpfer (9) versehen ist, während ein zweites führungsseitiges Bauelement (1b) des Radträgers (1) zur Anlenkung des oder zumindest der wesentlichen Führungsorgane(s) (1bc) vorgesehen ist, wobei diese Bauelemente (1a, 1b) des Radträgers (1) über Elastomerelemente (2a - 2c) miteinander verbunden sind,
**dadurch gekennzeichnet, dass** die beiden Bauelemente (1a,1b) des Radträgers (1) über ein in Fahrtrichtung (F) betrachtet vorderes und in der Höhe in etwa mittig angeordnetes erstes Elastomerelement (2a) sowie über zwei im wesentlichen hinter Radmitte liegende Elastomerelemente (2b, 2c) miteinander verbunden sind, von denen eines oberhalb und das andere unterhalb der Radmitte angeordnet ist.

2. Radaufhängung mit einem Radträger nach Anspruch 1, **dadurch gekennzeichnet, dass** am radseitigen Bauelement (1 a) eine Radbremse abgestützt ist, wobei das in Fahrtrichtung (F) betrachtet vor Radmitte liegende Elastomerelement (2a) zwischen den beiden Bauelementen (1a,1b) des Radträgers (1) solchermaßen um die Hochachse gedreht ist, dass eine durch Bremsen verursachte Verschiebung des Rades nach hinten ein gewünschtes Vorspurlenken mit Untersteuertendenz hervorruft.

3. Radaufhängung mit einem Radträger nach Anspruch 1 oder 2, **dadurch gekennzeichnet, dass** das Führungsorgan in Form eines Führungsbahnelementes (1bc) mit auf diesem verschiebbar geführtem Führungselement (11) gebildet ist und wobei entweder das Führungselement (11) oder vorzugsweise das Führungsbahnelement (1bc) am führungsseitigen Bauelement (1b) des Radträgers (1) befestigt ist oder dieses im wesentlichen bildet, während das andere Element am Aufbau (17) des Fahrzeugs befestigt ist.

4. Radaufhängung mit einem Radträger nach Anspruch 3, **dadurch gekennzeichnet, dass** das sich im wesentlichen vertikal erstreckende Führungsbahnelement (1bc) hinter Radmitte und in Vertikalrichtung betrachtet im wesentlichen zwischen einem oberen und einem unteren Elastomerelement (2b, 2c) zwischen den Radträger-Bauelementen (1a, 1b) angeordnet ist, während ein Schenkel (1ba) des führungsseitigen Bauelements (1b) von hier aus nach vorne zum vorderen Elastomerelement (2a) führt und wobei in diesem Schenkel (1ba) eine Durchtrittsöffnung (13) für die vor Radmitte angeordnete Tragfeder (8) vorgesehen ist.

## Claims

1. A wheel suspension with a wheel carrier, more especially for an axle of a multi-track vehicle, on which a support spring (8) proportionately carrying the bodywork of the vehicle as well as a vibration damper (9) parallel thereto are directly or indirectly supported and which is guided by means of one or more guide element(s) (1bc with 11), more especially with regard to the deflection and rebound movements of the vehicle bodywork with respect to the wheel (15) relative to the bodywork and wherein elastomer elements (2a to 2c) cooperate with the guide element(s), wherein the wheel carrier (1) is multi-part and has a first wheel-side component (1 a), which is provided with a hub or a wheel bearing unit (3) to receive the wheel (15) as well as support points (7a, 7b) for the support spring (8) and the vibration damper (9), while a second guide-side component (1b) of the wheel carrier (1) is provided to articulate the, or at least the essential, guide element(s) (1bc), these components (1 a, 1b) of the wheel carrier (1) being connected to one another by means of elastomer elements (2a, 2c), **characterised in that** the two components (1a, 1b) of the wheel carrier (1) are connected to one another by means of a front first elastomer element (2a), viewed in the travel direction (F), which is arranged approximately centrally with respect to height, as well as by two elastomer elements (2b, 2c) located substantially behind the wheel centre, of which one is arranged above the wheel centre and the other below it.

2. A wheel suspension with a wheel carrier according to claim 1, **characterised in that** a wheel brake is supported on the wheel-side component (1 a), the elastomer element (2a) located in front of the wheel centre, viewed in the travel direction (F), between the two components (1 a, 1 b) of the wheel carrier (1), being rotated about the vertical axis in such a way that a displacement of the wheel to the rear caused by braking brings about a desired toe-in steer with an understeering tendency.

3. A wheel suspension with a wheel carrier according to claim 1 or 2, **characterised in that** the guide element is in the form of a guide path element (1bc) with a displaceably guided guide element (11) thereon and wherein either the guide element (11) or preferably the guide path element (1bc) is fastened on the guide-side component (1 b) of the wheel carrier (1) or substantially forms the latter, while the other element is fastened to the bodywork (17) of the vehicle.

4. A wheel suspension with a wheel carrier according to claim 3, **characterised in that** the substantially vertically extending guide path element (1bc) is arranged behind the wheel centre and, viewed in the vertical direction, substantially between an upper and a lower elastomer element (2b, 2c) between the wheel carrier components (1 a, 1 b), while a leg (1ba) of the guide-side component (1 b) leads from here forward to the front elastomer element (2a) and wherein a through-opening (13) for the support spring (8) arranged before the wheel centre is provided in this leg (1ba).

## Revendications

1. Suspension de roue comportant un support de roue en particulier pour un essieu d'un véhicule à plusieurs voies sur lequel s'appuient directement ou indirectement un ressort de suspension (8) participant au support de la carrosserie du véhicule ainsi qu'un amortisseur de vibrations (9) monté parallèlement à celui-ci et qui est guidée relativement à la carrosserie par l'intermédiaire d'un ou de plusieurs organe(s) de guidage (1bc avec 11) en particulier compte tenu des mouvements de compression et de déploiement de la carrosserie du véhicule par rapport à la roue (15), dans laquelle des éléments élastomères (2a, 2c) coopèrent avec le ou les organe(s) de guidage, le support de roue (1) est réalisé en plusieurs parties et comporte un premier élément (1a) situé côté roue qui est équipé d'un moyeu ou d'une unité de roulement de roue (3) pour la réception de la roue (15), ainsi que des points d'appui (7a, 7b) du ressort de suspension (8) et de l'amortisseur de vibrations (9), alors qu'un second élément (1b) du support de roue (1) situé côté guidage permet l'articulation de l'organe de guidage ou au moins de l'organe de guidage principal (1bc), ces éléments (1a, 1b) du support de roue (1) étant reliés entre eux par des éléments élastomères (2a, 2c),
**caractérisé en ce que**
les deux éléments (1a, 1b) du support de roue (1) sont reliés entre eux par un premier élément élastomère (2a) situé à l'avant dans la direction de déplacement (F) et dans une position essentiellement médiane en hauteur ainsi que par deux éléments élastomères (2b, 2c) situés essentiellement en arrière du centre de la roue, dont l'un est situé au-dessus et l'autre en-dessous du centre de la roue.

2. Suspension de roue comportant un support de roue conforme à la revendication 1,
**caractérisé en ce qu'**
un frein de roue s'appuie contre l'élément (1a) situé côté roue, l'élément élastomère (2a) situé en avant du centre de la roue dans la direction de déplacement (F) étant mobile en rotation autour de l'axe normal entre les deux éléments (1a, 1b) du support de roue (1) de sorte qu'un patinage de la roue, vers l'arrière, provoqué par un freinage, entraine un braquage par pincement souhaité avec une tendance au sous virage.

3. Suspension de roue comportant un support de roue conforme à la revendication 1 ou 2,
**caractérisé en ce que**
l'organe de guidage est réalisé sous la forme d'un élément à glissière (1bc) avec un élément de guidage (11) monté coulissant sur celui-ci, et soit l'élément de guidage (11) soit de préférence l'élément à glissière (1bc) et fixé sur l'élément (1b) du support de roue (1) situé côté guidage ou forme essentiellement celui-ci, tandis que l'autre élément est fixé sur la carrosserie (17) du véhicule.

4. Suspension de roue comportant un support de roue conforme à la revendication 3,
**caractérisé en ce que**
l'élément à glissière (1bc) s'étendant essentiellement verticalement est situé en arrière du centre de la roue et considéré en direction verticale,
essentiellement entre un élément élastomère supérieur et un élément élastomère inférieur (2b, 2c) entre les éléments supports de roue (1a, 1b) alors qu'une branche (1ba) de l'élément (1b) situé côté guidage va à partir de cet élément vers l'avant vers l'élément élastomère avant (2a), et, cette branche (1ba) comporte une ouverture de passage (13) pour le ressort de suspension (8) monté en avant du centre de la roue.
